**Europäisches Patentamt**

**European Patent Office**

**Office européen des brevets**

(19)

(11) Veröffentlichungsnummer: **0 113 067**
**B1**

(12) **EUROPÄISCHE PATENTSCHRIFT**

(45) Veröffentlichungstag der Patentschrift:
**13.08.86**

(21) Anmeldenummer: **83112137.1**

(22) Anmeldetag: **02.12.83**

(51) Int. Cl.⁴: **C 08 F 279/02 //**
**(C08F279/02, 212:06)**

(54) **Verfahren zur Herstellung von schlagfesten Polymerisaten von Vinylaromaten.**

(30) Priorität: **08.12.82 DE 3245293**

(43) Veröffentlichungstag der Anmeldung:
**11.07.84 Patentblatt 84/28**

(45) Bekanntmachung des Hinweises auf die Patenterteilung:
**13.08.86 Patentblatt 86/33**

(84) Benannte Vertragsstaaten:
**BE DE FR GB NL**

(56) Entgegenhaltungen:
**FR-A-2 278 709**
**GB-A-1 121 885**
**US-A-4 146 589**

(73) Patentinhaber: **BASF Aktiengesellschaft, Carl-Bosch- Strasse 38, D-6700 Ludwigshafen (DE)**

(72) Erfinder: **Hoenl, Hans, Dr., Hauptstrasse 69 a, D-6719 Obersuelzen (DE)**

## Beschreibung

Die Erfindung betrifft ein Verfahren zur Herstellung von schlagfesten Polymerisaten von Vinylaromaten durch kontinuierliche Polymerisation eines Reaktionsansatzes, der Polybutadien als Kautschuk in mindestens einem vinylaromatischen Monomeren gelöst enthält, in einer Kaskade aus 2 Rührkesseln und 2 Turmreaktoren bei Temperaturen von 50 bis 160°C.

Transluzenz ist z.B. im Verpackungssektor gefragt.

Bekanntermaßen ist herkömmliches schlagfestes Polystyrol lichtundurchlässig. Wird die Weichkomponente Polybutadien durch einen Styrol-Butadien-Blockkautschuk ersetzt, so erhält man ein transluzentes, schlagfestes Material. Die großen lichtstreuenden Zellenteilchen der Polybutadien-Phase werden durch die kleineren Kapselteilchen der Blockkautschuk-Phase ersetzt.

Nachteilig bei diesem Stoffaustausch ist der im Vergleich zum Polybutadien höhere Preis des Blockkautschuks sowie die Abhängigkeit von einer bestimmten Spezifikation des selben.

Es bestand daher die Aufgabe, transluzentes schlagfestes Polystyrol auf der Basis von Polybutadien als Weichkomponente herzustellen, wobei für eine Herstellung in größerem Maßstab nur ein kontinuierliches Verfahren in Frage kommt.

Zum Stand der Technik nennen wir:

(1) DE—B—17 70 392 und

(2) DE—B—26 13 352.

In (1) ist ein kontinuierliches Verfahren zur Herstellung von schlagfesten kautschukhaltigen Polymerisaten beschrieben, das in einer Rührkessel-Turmkaskade thermisch durchgeführt wird.

In (2) ist ein zweistufiges diskontinuierliches Verfahren zur Herstellung von schlagfesten Styrolpolymerisaten beschrieben, das thermisch oder radikalisch durchgeführt werden kann. Bei diesem Verfahren können bei Verwendung von Blockcopolymerisaten als auch bei Verwendung von Polybutadien als Kautschuk schlagfeste und gleichzeitig transluzente Produkte erhalten werden.

Es hat sich nun gezeigt, daß die kontinuierliche radikalische Polymerisation in Gegenwart von Blockkautschuken in dem (1) bekannten diskontinuierlichen Verfahren auch zu transluzenten Produkten führt. Die Herstellung von transluzenten Produkten, ausgehend von Polybutadien als Kautschuk, führte jedoch bisher nicht zu transluzenten Produkten, wenn das in (1) beschriebene Verfahren angewendet wird, da sich nicht die für die Eigenschaft Transluzenz erforderliche vorwiegende Kapselteilchenmorphologie einstellen läßt.

Es bestand daher die Aufgabe, Polybutadien als Kautschuk in einem kontinuierlichen Verfahren, das radikalisch gestartet wird, zu transluzenten schlagfesten Produkten zu verarbeiten.

Die Aufgabe wird gelöst durch ein Verfahren gemäß Patentanspruch 1.

Die Erfindung betrifft somit ein Verfahren zur Herstellung von schlagfesten Polymerisaten von Vinylaromaten durch kontinuierliche Polymerisation eines Reaktionsansatzes der 2 bis 12 Gew.%, bezogen auf den Ansatz, mindestens eines Polybutadiens als Kautschuk in mindestens einem vinylaromatischen Monomeren gelöst enthält, und der zusätzlich gegebenenfalls ein indifferentes Lösungsmittel, sowie gegebenenfalls mindestens ein Hilfsmittel aufweist, in einer Kaskade aus einem ersten und zweiten Rührkessel und einem ersten und zweiten Turmreaktor, bei Temperaturen von 50 bis 160°C, wobei die Polymerisation in den beiden Rührkesseln unter an sich bekannten Scherbedingungen innerhalb des genannten Temperaturbereichs isotherm durchgeführt wird und die Polymerisation in den beiden Turmreaktoren jeweils isotherm oder mit ansteigendem Temperaturprofil bis zu Endumsätzen von 60 bis 90 Gew.%, im zweiten Turmreaktor, erfolgt, unter anschließender Abtrennung des Wertproduktes und unter üblicher Entfernung von nicht umgestezen Monomeren und gegebenenfalls von Lösungsmitteln. Das Verfahren ist dadurch gekennzeichnet, daß man die Polymerisation in Gegenwart von an sich bekannten pfropfaktiven peroxidischen Initiatoren durchführt und im ersten Rührkessel Umsätze von 16 bis 19 Gew.% einstellt.

Nachstehend werden das erfindungsgemäße Verfahren und die für seine Durchführung erforderlichen Ausgangsstoffe sowie Hilfsmittel beschrieben.

Als Vinylaromaten zur Durchführung des erfindungsgemäßen Verfahrens kommen Styrol, α-Methylstyrol, p-Methylstyrol oder Mischungen der vorgenannten Monomeren in Frage.

Unter Reaktionsansatz im Sinne des erfindungsgemäßen Verfahrens wird die Summe aus den vinylaromatischen Monomeren, dem Kautschuk, dem gegebenenfalls verwendeten Lösungsmittel und den gegebenenfalls verwendeten weiteren Hilfsmitteln, wie Mineralöl, verstanden.

Als Kautschuke zur Durchführung des erfindungsgemäßen Verfahrens können alle 1,4-Polybutadiene mit einem Anteil an cis-Konfiguration von mehr als 25% verwendet werden. Der Kautschuk wird in einer Menge von 2 bis 12, insbesondere in einer Menge von 5 bis 10 Gew.%, jeweils bezogen auf den Reaktionsansatz, eingesetzt.

Als Lösungsmittel können verwendet werden Toluol, Xylol und Ethylbenzol; letzteres wird vorzugsweise angewendet. Die Lösungsmittel werden in Mengen von 2 bis 10 Gew.%, insbesondere von 4 bis 6 Gew.%, jeweils bezogen auf den Reaktionsansatz, d.h. auf die Gesamtmischung aus vinylaromatischen Monomeren plus Kautschuk plus Lösungsmittel plus Hilfsmittel angewendet. Das Lösungsmittel kann im erfindungsgemäßen Verfahren gegebenenfalls abwesend sein, es wird vorzugsweise jedoch angewendet.

Der Reaktionsansatz kann gegebenenfalls Hilfsmittel enthalten; als solche seien genannt Mineralöle, übliche Molekulargewichtsregler, d.h. Mercaptane mit 2 bis 40 C-Atomen sowie die gebräuchlichen Antioxidantien auf Basis sterisch gehinderter Phenole. Diese Hilfsmittel, insbesondere die Mineralöle, werden dem Reaktionsansatz von Anfang an, d.h. bereits bei der Mischung des Reaktionsansatzes zugegeben. Sie können jedoch auch zu einem späteren Zeitpunkt dem Polymerisationsansatz zugegeben werden bzw. erst vor Durchführung der Konfektionierung eingebracht werden. Ferner seien als Hilfsmittel genannt Gleitmittel, wie Zinkstearat und andere Stearate bzw. andere übliche Gleitmittel. Da die genannten Kautschuke gelegentlich basische Reste enthalten, werden dem Reaktionsansatz kleinere Mengen an Acrylsäure zur Neutralisation zugegeben.

Wesentlich für die Durchführung des erfindungsgemäßen Verfahrens ist die Verwendung der vorstehend genannten Kautschuke auf Basis von Polybutadien in einem kontinuierlichen Verfahren, das in Anwesenheit eines Initiators gestartet wird und das in einer Rührkessel-Turmkaskade, die aus zwei Rührkesseln und zwei Türmen aufgebaut ist, abläuft. Zur Durchmischung bzw. Homogenisierung des Reaktionsansatzes kann die vorstehend genannte — und insbesondere in der Druckschrift (1) beschriebene — Kaskade mit einem verhältnismäßig kleinvolumigen Vormischer ausgerüstet sein, der gegebenenfalls einen Rührer oder andere Mischorgane enthält. In diesem Vormischer wird die Lösung des Kautschuks in dem vinylaromatischen Monomeren mit dem Lösungsmittel, den Startern sowie den weiteren Hilfsmitteln gemischt und dann in den ersten Rührkessel eingebracht.

Im ersten Rührkessel wird eine Temperatur im Bereich von 70 bis 110°C, vorzugsweise eine solche im Bereich von 75 bis 98°C eingestellt. Wesentlich für den Erfolg des erfindungsgemäßen Verfahrens ist, daß die Umsätze in diesem ersten Rührkessel sehr eng in dem Bereich von 16 bis 19% gehalten werden. Wenn dieser Bereich eingestellt wird, werden Endprodukte erhalten, die überwiegend eine Kapselteilchenmorphologie aufweisen, d.h. kleine Teilchen im Größenbereich unter ca. 0,5µm. Gelegentlich finden sich, dies ist nicht ganz auszuschließen, ein geringer Anteil an Zellenteilchen kleinerer Art. Im ersten Rührkessel ist eine Scherung erforderlich, die dem Fachmann an sich bekannt ist, zur Erzielung des Erfolges ist in der vom Fachmann gewählten Apparatur diese Scherwirkung anhand einiger orientierender Versuche festzulegen.

Der zweite Rührkessel wird bei Temperaturen von 65 bis 110°C, insbesondere bei solchen von 80 bis 95°C betrieben. In diesem zweiten Rührkessel werden Umsätze von 17 bis 45 Gew.%, insbesondere von 20 bis 30 Gew.% eingestellt. Auch der zweite Rührkessel wird unter an sich bekannten Scherbedingungen betrieben. Die beiden Rührkessel werden jeweils isotherm, d.h. bei einer vorgewählten konstanten Temperatur, betrieben. Das Reaktionsprodukt gelangt anschließend in eine weitere Teilkaskade, die aus 2 Türmen besteht, die in an sich bekannter Weise unter schwachem Rühren bzw. geringem Scheren betrieben werden. Die Temperatur im ersten Turm kann im Bereich von 100 bis 140, insbesondere im Bereich von 105 bis 125°C, gewählt werden. Im ersten Turm wird der Umsatzt auf 30 bis 60, vorzugsweise 45 bis 55 Gew.% eingestellt. Im anschließenden 2. Turm werden die Temperaturen im Bereich von 120 bis 150°C, insbesondere im Bereich von 135 bis 145°C gewählt; dabei werden die Endumsätze im 2. Turm in dem Bereich von 60 bis 90, vorzugsweise im Bereich von 75 bis 85 Gew.% eingestellt. Die Polymerisation kann in beiden Türmen entweder isotherm, oder aber mit ansteigendem Temperaturprofil durchgeführt werden. Alle vorstehend genannten Temperaturbereiche beziehen sich auf eine kleine halbtechnische Anlage mit einem Gesamtvolumen im Bereich von 5 bis 40 Liter. Die zu wählenden Temperaturen und Umsätze können vom Fachmann bei einer Übertragung auf eine technische oder andere Anlage aufgrund einiger orientierender Versuche nach an sich bekannten Kriterien festgelegt werden.

Das den zweiten Turm verlassende Reaktionsprodukt wird anschließend im Temperaturbereich von 200 bis 260°C bie 13,3 bis 66,6 mbar (1330 bis 6660 Pa) entgast. Bei dieser Entgasung im Vakuum wird das gegebenenfalls angewendete Lösungsmittel und das nicht umgesetzte vinylaromatische Monomere abgezogen. Anschließend wird das so entgaste Produkt durch Extrusion unter weiterer Entgasung bis auf Restgehalte von 0,2 bis 0,5 Gew.% Styrol und Lösungsmittel granuliert.

Zur Durchführung des erfindungsgemäßen Verfahrens werden an sich bekannte pfropfaktive Starter auf Basis von Peroxiden verwendet. Sie werden in Mengen von 0,02 bis 0,3 Gew.%, bezogen auf den Reaktionsansatz, eingesetzt. Als zu verwendende Initiatoren seien genannt: tert.-Butylperpivalat, 1,1-Di-tert.-butyperoxi-3,3,5-trimethylcyclohexan, tert.-Butyl-peroxiisopropylcarbonat, tert.-Butylperbenzoat, Dicumylperoxid, ferner können weniger bevorzugt tert.-Butylperacetat, 1,3-Di-tert.-butylperoxiisopropylbenzol, tert.-Butylcumylperoxid und Di-tert.-butylperoxid zur Anwendung gelangen. Besonders bevorzugt werden tert.-Butylperoxi-2-ethylhexanoat und Dibenzoylperoxid angewendet.

Der Starter wird, nach den dem Fachmann bekannten Bedinungen zweckmäßigerweise in den Reaktionsansatz, d.h. in den Vormischer, in dem der Reaktionsansatz homogenisiert wird, eingebracht.

Das Verfahrensprinzip des erfindungsgemäßen Verfahren, kann Fig. 2 der DE—B—17 70 392 entnommen werden. Es ist lediglich zweckmäßigerweise noch der der Kaskade vorgeschaltete Vormischer anzuwenden. Anzumerken ist noch, daß das Volumen des Vormischers sehr klein im Verhältnis zu den Volumina der beiden Rührkessel sein sollte. Das erfindungsgemäße Verfahren ist auch ohne diesen Vormischer durchführbar. Unabhängig davon ob der Vormischer verwendet oder nicht verwendet wird, müssen im ersten Rührkessel die erfindungsgemäß einzustellenden Umsätze eingehalten werden.

Die nach dem erfindungsgemäßen Verfahren erhaltenen schlagfesten transluzenten vinylaromatischen Polymerisate eignen sich insbesondere zum Einsatz im Verpackungssektor. Als wichtigste Formteile kommen somit in Frage: Folien, im Verpackungssektor, insbesondere seien genannt Verpackungen für Molkereiprodukte, Eier, Spielwaren und Fotoapparate, sowie Trinkbecher für Automaten und Sortierkästen für Heimwerker. Für die Herstellung dieser Formteile können den erfindungsgemäßen Produkten die üblichen Zusatzstoffe, d.h. Farbstoffe, Antioxidantien, Stabilisatoren und eventuell Flammschutzmittel in üblichen Mengen zugesetzt werden.

Die in den Beispielen und Vergleichsversuchen beschriebenen Parameter wurden wie folgt bestimmt:

1. Streckspannung in $N/mn^2$ nach DIN 53 455.

2. Oberflächenrauhigkeit in µm, gemessen mit Surfindicator der Fa. Brush Instruments, USA, am Faden der Schmelzindex-Messung.

3. Gelgehalt [25°C] in Methylethylketon/Aceton nach Abzentrifugieren des Unlöslichen, Dekantieren und Trocknen in Gew.% der Einwaage.

4. Die Bestimmung der Viskositätszahl des schlagfesten Polystyrols erfolgt analog DIN 53 726; dabei wurden 0,5 g Material in 100 ml Toluol gelöst.

5. Zur Prüfung der Zähigkeit wurden bei 250°C Prüfkörper gespritzt. Daran wurde die Kerbschlagzähigkeit nach DIN 53 453 bei 23°C gemessen.

6. Der mittlere Teilchendurchmesser der integralen Masseverteilung der Weichkomponente wurde durch Auswertung von Elmi-Aufnahmen bestimmt.

7. Zur Bewertung der Transluzenz der beim erfindungsgemäßen Verfahren erhaltenen Produkte wurde zunächst eine Skala erstellt. Diese Skala umfaßt die Werte 1 bis 9 in der folgenden Tabelle 1, wobei die niedrigeren Werte eine gute Transluzenz repräsentieren.

Um die in der Tabelle angeführten Werte zu erzielen, wurde ein handelsübliches schlagfestes Polystyrol (Produkt A), das 15 Gew.% eines Styrol-Butadien-Blockkautschuks (Butadiengehalt 60%) (Typ B 6533, früher SR 6533) mit Kapselteilchenmorphologie enthielt, zugrundegelegt (Benotung 4). Abmischungen dieses Produktes A in den in der Tabelle 1 genannten Gewichtsverhältnissen mit Standardpolystyrol der VZ 96 [ml/g] ergaben die Werte von 3 bis 1 für die Transluzenz. Durch Abmischung von einem schlagfesten Polystyrol mit Kapselteilchenmorphologie (Produkt A) mit einem schlagfesten Polystyrol mit Zellenteilchenmorphologie [Produkt B, Handelsprodukt, thermisch hergestellt], das 8 Gew.% Polybutadien enthält, wurden höhere Werte der Transluzenz erzielt; vgl. die Werte 5 bis 9 in der Tabelle 1.

Von Proben der erfindungsgemäßen Produkte der Beispiele und der Vergleichsversuche wurden Preßblättchen hergestellt und visuell mit den entsprechenden Preßblättchen der Standards der Skala verglichen. Dabei ergab sich, daß die erfindungsgemäßen Produkte Werte im Bereich von 6,0 bis 6,5 aufwiesen.

TABELLE 1

| Note für die Transluzenz | Abmischung in Gew.-Teilen | | |
|:---:|:---:|:---:|:---:|
| | produkt A | Standard-polystyrol | Produkt B |
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

Zur Durchführung der Beispiele und Vergleichsversuche wurde als Kautschuk ein Polybutadien Typ Buna CB 529 C der Firma Bayer AG mit einem trans-1,4-Gehalt von 50 bis 60%, einem cis-1,4-Gehalt zwischen 30 bis 40% und einem 1,2-Vinylgehalt von 5 bis 15% verwendet. Die Moneyviskosität ML-4 mm/ 100°C betrug 59. Dem Reaktionsansatz wurde ein Antioxidans auf Basis eines sterisch gehinderten Phenols (Irganox® 1076) zugegeben, außerdem wurde diesem ein aromatenarmes, technisches Weißöl zugegeben.

Die Erfindung wird nachstehend anhand von Beispielen und Vergleichsversuchen näher erläutert. Die in den Beispielen und Vergleichsversuchen genannten Teile und Prozente beziehen sich, sofern nichts anderes angegeben ist, auf das Gewicht.

In allen Beispielen und Vergleichsversuchen wurde eine 2-Kessel-, 2-Turmkaskade mit einem Fassungsvermögen von 4,5, 10, 12 und 12 l Inhalt verwendet. Dem ersten Rührkessel wurde zusätzlich noch ein mit einem Rührer ausgestatteter Vormischer von 1 l Inhalt vorgeschaltet.

## Beispiel 1

Ansatz: 86,62 kg Styrol; 5,00 kg Ethylbenzol; 6,34 kg Polybutadien; 1,84 kg Mineralöl; 0,12 kg Irganox 1076; 0,02 kg Acrylsäure; 0,06 kg Zinkstearat; 0,10 kg tert.-Butylperoxi-2-ethylhexanoat.

| | | |
|---|---|---|
| Durchsatz: | 4 l/h | |
| Vormischer: | Rührerdrehzahl (UPM) | 100 |
| | Temperatur (°C) | 88 |
| | Umsatz (%) | 2 |
| 1. Rührkessel: | Rührerdrehzahl (UPM) | 100 |
| | Temperatur (°C) | 97 |
| | Umsatz (%) | 18 |
| 2. Rührkessel: | Rührerdrehzahl (UPM) | 240 |
| | Temperatur (°C) | 89 |
| | Umsatz (%) | 25 |
| 1. Reaktionsturm: | Rührerdrehzahl (UPM) | 20 |
| | Temperatur (°C) | 117 |
| | Umsatz (%) | 51 |
| 2. Reaktionsturm: | Rührerdrehzahl (UPM) | 10 |
| | Temperatur (°C) | 144 |
| | Umsatz (%) | 79 |

Es wurde schlagfestes Polystyrol mit einem Transluzenz-Wert on 6,0 erhalten.

Vergleichsversuche Ia bis d

Ansatz und Durchsatz wie Beispiel 1

| | | a) | b) | c) | d) |
|---|---|---|---|---|---|
| Vormischer: | Rührerdrehzahl (UPM) | 100 | 100 | 100 | 100 |
| | Temperatur (°C) | 87 | 91 | 79 | 77 |
| | Umsatz (%) | 2 | 2 | 2 | 2 |
| 1. Rührkessel: | Rührerdrehzahl (UPM) | 100 | 100 | 100 | 100 |
| | Temperatur (°C) | 82 | 90 | 102 | 106 |
| | Umsatz (%) | 9 | 13 | 21 | 24 |
| 2. Rührkessel: | Rührerdrehzahl (UPM) | 240 | 240 | 240 | 240 |
| | Temperatur (°C) | 95 | 93 | 81 | 68 |
| | Umsatz (%) | 24 | 25 | 25 | 25 |
| 1. Reaktionsturm: | Rührerdrehzahl (UPM) | 20 | 20 | 20 | 20 |
| | Temperatur (°C) | 116 | 116 | 115 | 111 |
| | Umsatz (%) | 52 | 52 | 51 | 51 |
| 2. Reaktionsturm: | Rührerdrehzahl (UPM) | 10 | 10 | 10 | 10 |
| | Temperatur (°C) | 144 | 140 | 143 | 143 |
| | Umsatz (%) | 78 | 78 | 78 | 78 |
| Transluzenz-Wert: | | 9,5 | 7,0 | 8,0 | 9,5 |

Beispiele 2a und 2b

Ansatz: 85,04 kg Styrol; 5,00 kg Ethylbenzol; 8,00 kg Polybutadien; 1,84 kg Mineralöl; 0,12 kg Irganox 1076; 0,02 kg Acrylsäure; 0,06 kg Zinkstearat; 0,10 kg tert.-Butylperoxid-2-ethylhexanoat.

| Durchsatz: | 3 1/h | | a) | b) |
|---|---|---|---|---|
| Vormischer: | Rührerdrehzahl (UPM) | | 100 | 100 |
| | Temperatur (°C) | | 79 | 79 |
| | Umsatz (%) | | 2 | 2 |
| 1. Rührkessel: | Rührerdrehzahl (UPM) | | 100 | 100 |
| | Temperatur (°C) | | 88 | 92 |
| | Umsatz (%) | | 16. | 18 |
| 2. Rührkessel: | Rührerdrehzahl (UPM) | | 240 | 240 |
| | Temperatur (°C) | | 87 | 84 |
| | Umsatz (%) | | 26 | 25 |
| 1. Reaktionsturm: | Rührerdrehzahl (UPM) | | 20 | 20 |
| | Temperatur (°C) | | 94 | 92 |
| | Umsatz (%) | | 52 | 52 |
| 2. Reaktionsturm: | Rührerdrehzahl (UPM) | | 10 | 10 |
| | Temperatur (°C) | | 136 | 136 |
| | Umsatz (%) | | 79 | 79 |
| Transluzenz-Wert | | | 6,5 | 6,5 |

Vergleichsversuche 2a und 2b
Ansatz und Durchsatz wie Beispiel 2

| | | | a) | b) |
|---|---|---|---|---|
| Vormischer: | Rührerdrehzahl (UPM) | | 100 | 100 |
| | Temperatur (°C) | | 79 | 79 |
| | Umsatz (%) | | 3 | 3 |
| 1. Rührkessel: | Rührerdrehzahl (UPM) | | 100 | 100 |
| | Temperatur (°C) | | 80 | 101 |
| | Umsatz (%) | | 9 | 25 |
| 2. Rührkessel: | Rührerdrehzahl (UPM) | | 240 | 240 |
| | Temperatur (°C) | | 91 | 74 |
| | Umsatz (%) | | 24 | 27 |
| 1. Reaktionsturm: | Rührerdrehzahl (UPM) | | 20 | 20 |
| | Temperatur (°C) | | 89 | 103 |
| | Umsatz (%) | | 52 | 53 |
| 2. Reaktionsturm: | Rührerdrehzahl (UPM) | | 10 | 10 |
| | Temperatur (°C) | | 130 | 138 |
| | Umsatz (%) | | 79 | 80 |
| Transluzenz-Wert | | | 9,0 | 9,5 |

An den Proben der in den Vergleichsversuchen und Beispielen erhaltenen Produkte wurden verschiedene Parameter in üblicher Weise bestimmt. In der folgenden Tabelle ist eine Übersicht der Eigenschaften der bei den Versuchen erhaltenen Produkte wiedergegeben. In dieser Tabelle 2 sind die in der im ersten Rührkessel angestrebten Umsätze und die Transluzenzwerte mitaufgenommen. Aus dieser Tabelle ist ersichtlich, daß Transluzenz und Umsatz im ersten Rührkessel voneinander abhängen. Bei der gegebenen Versuchsanordnung, die auch für andere Kautschukgehalte gilt, werden die besten Transluzenzwerte für das Endprodukt erzielt, wenn der Umsatz im ersten Rührkessel eng in dem beanspruchten Bereich von 16 bis 19% gehalten wird.

TABELLE 2

Beispiele (B) und Vergleichsversuche (V)

| | B1 | V1 | | | | B2 | | V2 | |
|---|---|---|---|---|---|---|---|---|---|
| | | a | b | c | d | a | b | a | b |
| Streckspannung [N/mm²] | 32,7 | 27,9 | 33,3 | 31,7 | 25,9 | 32,7 | 33,1 | 27,2 | 24,7 |
| Oberflächenrauhtiefe [µ] | 0,23 | 0,28 | 0,26 | 0,25 | 0,53 | 0,32 | 0,25 | 0,46 | 0,58 |
| Gelgehalt [%] | 23,3 | 23,9 | 23,6 | 23,7 | 23,6 | 25,6 | 22,2 | 30,8 | 28,8 |
| Viskositätszahl [ml/g] | 90,2 | 82,4 | 93,5 | 93,0 | 82,0 | 97,1 | 91,0 | 91,1 | 90,5 |
| Transluzenz | 6,0 | 9,5 | 7,0 | 8,0 | 8,5 | 6,5 | 6,0 | 9,0 | 9,5 |

**Patentansprüche**

1. Verfahren zur Herstellung von schlagfesten Polymerisaten von Vinylaromaten durch kontinuierliche Polymerisation eines Reaktionsansatzes der 2 bis 12 Gew.%, bezogen auf den Ansatz, mindestens eines Polybutadiens als Kautschuk in mindestens einem vinylaromatischen Monomeren gelöst enthält, und der zusätzlich gegebenenfalls ein indifferentes Lösungsmittel, sowie gegebenenfalls mindestens ein Hilfsmittel aufweist,
in einer Kaskade aus einem ersten und zweiten Rührkessel und einem ersten und zweiten Turmreaktor bei Temperaturen von 50 bis 160°C, wobei die Polymerisation in den beiden Rührkesseln unter an sich bekannten Scherbedingungen innerhalb des genannten Temperaturbereiches isotherm durchgeführt wird, und die Polymerisation in den beiden Turmreaktoren jeweils isotherm oder mit ansteigendem Temperaturprofil bis zu Endumsätzen von 60 bis 90 Gew.%, im zweiten Turmreaktor erfolgt, unter anschließender Abtrennung des Wertproduktes und unter üblicher Entfernung von nicht umgesetzten Monomeren und gegebenenfalls von Lösungsmitteln, dadurch gekennzeichnet, daß man die Polymerisation in Gegenwart von an sich bekannten pfropfaktiven peroxidischen Initiatoren durchführt und im ersten Rührkessel Umsätze von 16 bis 19 Gew.% einstellt.
2. Verwendung der gemäß Verfahren nach Anspruch 1 erhaltenen schlagfesten Polymerisate zur Herstellung von Formteilen.
3. Formteile aus gemäß Verfahren nach Anspruch 1 erhaltenen schlagfesten Polymerisaten.

**Revendications**

1. Procédé de préparation de polymères vinylaromatiques résistants au choc par polymérisation en continu d'une charge réactionnelle qui contient, en tant que caoutchouc, 2 à 12% en poids, sur la base de la charge, d'au moins un polybutadiène en solution dans au moins un monomère vinylaromatique et qui présente en plus, le cas échéant, un solvant inerte et éventuellement au moins un produit auxiliaire, dans une cascade d'une première et d'une seconde cuves à agitateur et d'une premier et un second réacteur en colonne, à des températures de 50 à 160°C, la polymérisation dans les deux cuves à agitateur étant conduite isothermiquement dans les limites de la gamme de température précitée dans des conditions de cisaillement en soi connues et la polymerisation s'effectuant, dans chacun des deux réacteurs à colonne, isothermiquement ou avec un profil de températures croissant dans la second réacteur à colonne jusqu'à des degrés de transformation finals de 60 à 90% en poids, avec séparation subséquente du produit de valeur et avec élimination, de la manière habituelle, des monomères n'ayant pas réagi et, le cas échéant, des solvants, caractérisé en ce qu'on mène la polymérisation en présence d'initiateurs peroxydiques à activité de greffage et qu'on règle, dans la première cuve à agitateur, des degrés de transformation de 16 à 19% en poids.
2. Utilisation des polymères résistants au choc, obtenus d'après le procédé selon la revendication 1, pour la fabrication de pièces moulées.
3. Pièces moulées faites de polymères résistants au choc, obtenus d'après le procédé selon la revendication 1.

**Claims**

1. A process for the preparation of high-impact polymers of vinylaromatic compounds by continuous polymerization of a reaction mixture, which contains a solution of from 2 to 12% by weight, based on the mixture, of at least one polybutadiene, as rubber, in at least one vinylaromatic monomer, and may, if

**0 113 067**

desired, additionally contain an indifferent solvent and at least one auxiliary, in a cascade of a first and a second stirred vessel and a first and a second tower reactor, at a temperature of from 50 to 160°C, the polymerization in the two stirred vessels being conducted isothermally within the said temperature range under conventional shearing conditions, and the polymerization in the two tower reactors being conducted isothermally or with a rising temperature profile to a final conversion in the second tower reactor of from 60 to 90% by weight, followed by isolation of the product of value, and removal of unreacted monomers and any solvent present in a conventional manner, wherein the polymerization is carried out in the presence of a conventional peroxide initiator with a high grafting efficiency, and the conversion in the first stirred vessel is adjusted to 16 to 19% by weight.

2. The use of the high-impact polymers, obtained by the process as claimed in claim 1, for the production of moulded parts.

3. Moulded parts produced from the high-impact polymers obtained by the process as claimed in claim 1.